# EUROPEAN PATENT SPECIFICATION

(11) **EP 3 660 375 B1**
(45) Date of publication and mention of the grant of the patent: **18.10.2023**
(21) Application number: 18838008.3
(22) Date of filing: 24.07.2018
(51) Int. Cl.: F16L 11/08, C08G 81/02, C08L 23/26, C08L 77/00, B32B 1/08, B32B 25/08, B32B 25/14, B32B 27/08, B32B 27/32, B32B 27/34, C08L 23/00

(54) **REFRIGERANT TRANSPORT HOSE**
KÜHLMITTELTRANSPORTSCHLAUCH
TUYAU DE TRANSPORT DE FLUIDE FRIGORIGÈNE

(30) Priority: 24.07.2017 JP 2017142495
(43) Date of publication of application: 03.06.2020
(73) Proprietor: Bridgestone Corporation, Tokyo 104-8340 (JP)
(72) Inventor: KATAOKA Hisataka, Tokyo 104-8340 (JP); HATANAKA Kota, Tokyo 104-8340 (JP)
(74) Representative: Marks & Clerk LLP
(86) International application number: PCT/JP2018/027711
(87) International publication number: WO 2019/022076

(56) References cited:
- WO-A1-2012/115147
- JP-A- H07 109 386
- JP-A- 2007 260 955
- JP-A- 2011 089 007
- JP-A- 2012 091 486
- JP-A- 2012 207 797
- US-A1- 2012 199 237

## Description

### Technical Field

The present invention relates to a refrigerant transport hose used for equipment such as a car air conditioner.

### Background Art

Generally, refrigerant transport hoses used for equipment such as a car air conditioner have a structure in which a polyamide resin composition layer (barrier layer), a rubber layer, a reinforcing yarn layer, and a rubber layer are laminated in order from the inside, see for example refrigerant transport hoses disclosed in Patent Literatures 2 and 3. In order to improve the impact resistance performance of the hose, polyolefin-based elastomers are generally added to the polyamide resin composition layer. In addition, it is known that there are polyamide resin compositions for a hose to which a phenolic antioxidant, a sulfur-containing antioxidant, or the like is added in order to improve refrigerant barrier properties and the like.

### Prior Art Literature

### Patent Literature

[Patent Literature 1] JP A H4-298344
[Patent Literature 2] WO 2012/115147 A1
[Patent Literature 3] US 2012/0199237 A1

### Summary of Invention

### Problems to be solved by the Invention

A medium transported in a refrigerant transport hose generally contains lubricating oil in addition to the refrigerant. There are cases where there is a trace amount of water in the lubricating oil and the polyamide resin composition layer is deteriorated as the water itself or an additive (particularly an extreme pressure agent contained in the lubricating oil) is hydrolyzed to generate acid. Although attempts to improve durability by adding an acid acceptor such as magnesium oxide or hydrotalcite to the polyamide resin layer have been made in order to solve the problem, further improvement in durability is required in recent years. The refrigerant transport hose is required to have excellent barrier properties for its function.

Accordingly, an object of the present invention is to provide a refrigerant transport hose that is excellent in both durability and barrier properties.

### Means for Solving the Problems

The above object is achieved by a refrigerant transport hose comprising a barrier layer formed from a resin composition containing a polymer component as an innermost layer, the polymer component comprising a polyamide resin (A) and a polyolefin-based elastomer (B),
wherein the innermost layer is to be in direct contact with a refrigerant and an oil flowing in the refrigerant transport hose,
the polymer component further comprises a block copolymer (C) having a structure in which a polyamide block is grafted to a polyolefin skeleton,
a content of the block copolymer (C) is 5 to 45 parts by mass with respect to 100 parts by mass of the polymer component,
a total content of the polyolefin-based elastomer (B) and the block copolymer (C) is less than 70 parts by mass with respect to 100 parts by mass of the polymer component, and
the block copolymer (C) has bimodal melting peaks in differential scanning calorimetry (DSC), a melting peak temperature on a low temperature side is 85°C or more, and a melting peak temperature on a high temperature side is 200°C or more.

The refrigerant transport hose excellent in both durability and barrier properties can be obtained by using the above specific block copolymer (C) in which a polyamide is grafted on a polyolefin skeleton in the above specific amount, in addition to the polyamide resin (A) and polyolefin-based elastomer (B), which have been conventionally used. In particular, it becomes possible to improve the durability of the refrigerant transport hose as compared with conventional formulations containing an acid acceptor such as magnesium oxide or hydrotalcite.

In preferred aspects of the refrigerant transport hose of the present invention,
(1) at least a part of the polyolefin-based elastomer (B) is acid-modified, and
(2) the polyamide resin (A) is nylon 6.

### Effects of Invention

The refrigerant transport hose of the present invention is excellent in barrier properties and durability. Thus, the function of transporting refrigerants can be maintained for a long period of time when the refrigerant transport hose of the present invention is used for equipment such as a car air conditioner.

### Brief Description of Drawing

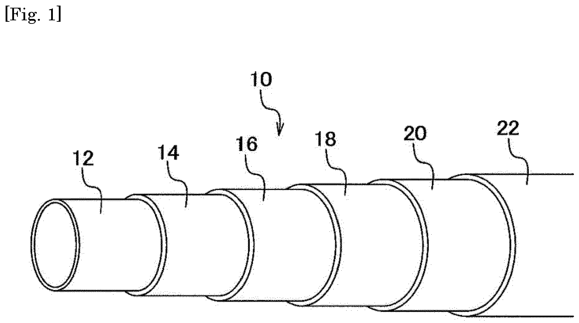

Fig. 1 is a schematic perspective view illustrating an example of a refrigerant transport hose of the present invention.

### Mode for carrying out the Invention

In the present invention, a resin composition forming a barrier layer of a refrigerant transport hose contains a polyamide resin (A), a polyolefin-based elastomer (B), and a block copolymer (C) having a structure in which a polyamide block is grafted to a polyolefin skeleton. Hereinafter, embodiments of the present invention will be specifically described, but the present invention is not limited by the embodiments in any way. Further, any combination of all configurations described below is also included in the present invention.

### <Polyamide resin (A)>

The polyamide resin (A) used in the present invention is, for example, a polyamide containing an amino acid, a lactam, or combination of a diamine and a dicarboxylic acid as a main constituent component. Specific examples of these constituent components include: lactams such as ε-caprolactam, enantholactam, and ω-laurolactam; amino acids such as ε-aminocaproic acid, 11-aminoundecanoic acid, and 12-aminododecanoic acid; diamines such as tetramethylenediamine, hexamethylenediamine, undecamethylenediamine, dodecamethylenediamine, 2,2,4-/2,4,4-trimethylhexamethylenediamine, 5-methylnonamethylenediamine, m-xylylenediamine, p-xylylenediamine, 1,3-bisaminomethylcyclohexane, 1,4-bisaminomethylcyclohexane, bis-p-aminocyclohexylmethane, bis-p-aminocyclohexylpropane, and isophoronediamine; and dicarboxylic acids such as adipic acid, suberic acid, azelaic acid, sebacic acid, dodecanedioic acid, 1,4-cyclohexanedicarboxylic acid, 1,3-cyclohexanedicarboxylic acid, terephthalic acid, isophthalic acid, naphthalene dicarboxylic acid, and dimer acid. These constituent components are used for polymerization alone or in the form of a mixture of two or more, and the resulting polyamide resin may be either a homopolymer or a copolymer.

Examples of the polyamide resin (A) that is particularly effectively used in the present invention include polycapramide (nylon 6), polyhexamethylene adipamide (nylon 66), polytetramethylene adipamide (nylon 46), polyhexamethylene sebacamide (nylon 610), polyundecanamide (nylon 11), polydodecanamide (nylon 12), polyhexamethylene adipamide/hexamethylene terephthalamide copolymer (nylon 66/6T), polycapramide/polyhexamethylene adipamide copolymer (nylon 6/66), and these may be used alone or in combination of two or more. Nylon 6 is particularly preferable.

The degree of polymerization of the polyamide is not particularly limited, and any polyamide having a relative viscosity (hereinafter sometimes simply referred to as "relative viscosity") at 25°C of a 1% by mass concentration sulfuric acid solution in the range of 1.5 to 5.0 may be optionally used. The terminal group concentration of the polyamide resin (A) may be prepared by adding one or more of a monocarboxylic acid compound and/or a dicarboxylic acid compound or a monoamine compound and/or a diamine compound to the polyamide at any stage.

From the viewpoint of ensuring sufficient barrier properties, the content of the polyamide resin (A) is 5 to 95 parts by mass, preferably 10 to 90 parts by mass, more preferably 20 to 80 parts by mass, still more preferably 30 to 70 parts by mass, and particularly preferably more than 30 parts by mass and 70 parts by mass or less with respect to 100 parts by mass of the polymer component contained in the resin composition forming the barrier layer.

### <Polyolefin-based elastomer (B)>

The resin composition forming the barrier layer contains a polyolefin-based elastomer (B). By blending the polyolefin-based elastomer (B), the flexibility and durability of the barrier layer formed of the polyamide resin composition in the present invention are improved.

Examples of the polyolefin-based elastomer (B) include an ethylene/butene copolymer, an EPR (ethylene-propylene copolymer), a modified ethylene/butene copolymer, an EEA (ethylene-ethyl acrylate copolymer), a modified EEA, a modified EPR, a modified EPDM (ethylene-propylene-diene terpolymer), an ionomer, an α-olefin copolymer, a modified IR (isoprene rubber), a modified SEBS (styrene-ethylene-butylene-styrene copolymer), a halogenated isobutylene-paramethylstyrene copolymer, an ethylene-acrylic acid modified product, an ethylene-vinyl acetate copolymer, an acid-modified product thereof, and a mixture containing these as main components. These may be used alone or in combination of two or more.

In order to make the polyolefin-based elastomer (B) compatible with, i.e. well dispersed in, the resin composition forming the barrier layer, it is preferable that at least a part of the elastomer be acid-modified with maleic anhydride or the like. It is more preferable that 40 to 100% by mass of the polyolefin-based elastomer (B) be acid-modified, and particularly preferable that the entire polyolefin-based elastomer (B) used be acid-modified. The average acid value (acid modification rate) of the entire elastomer to be used for obtaining a well-dispersed form is preferably 0.8 mg-CH₃ONa/g or more, and the upper limit thereof is not particularly limited, but preferably 30 mg-CH₃ONa/g or less, and more preferably 15 mg-CH₃ONa/g or less.

When the content of the polyolefin-based elastomer (B) in the polyamide resin composition according to the present invention is too small, the effects of improving flexibility and durability brought by blending the polyolefin-based elastomer (B) cannot be sufficiently obtained, and when the content thereof is too large, the gas barrier properties are lowered, and thus the content thereof is 5 parts by mass or more and less than 65 parts by mass, preferably 10 to 60 parts by mass, still more preferably 15 to 55 parts by mass, particularly preferably 15 to 50 parts by mass, and most preferably 18 to 36 parts by mass with respect to 100 parts by mass of the polymer component contained in the resin composition forming the barrier layer.

### <Block copolymer (C)>

The block copolymer (C) is a polymer in which a polyamide block is graft-bonded to a polyolefin skeleton (main chain). Since the block copolymer (C) has fewer sites that react with acid compared to a simple polyamide resin, hydrolysis by acid derived from refrigerant and oil flowing in the hose is less likely to occur, and the durability of the barrier layer can be improved. The block copolymer (C) may be obtained, for example, by mixing a polyolefin-based (co)polymer having a functional group and a functional polyamide that reacts with the functional group in a molten state. By blending the block copolymer (C) with the polyamide resin (A) and the polyolefin-based elastomer (B), the durability is remarkably improved. The polyolefin serving as the skeleton of the block copolymer (C) may be the same as the polyolefin exemplified in the above-mentioned polyolefin-based elastomer, and the polyamide block in the block copolymer (C) may be the same as the polyamide exemplified in the above-mentioned polyamide (A), and these are appropriately selected so as to obtain a specific melting peak temperature described later. Polyamide 6 grafted polyolefin is particularly preferable.

The content of the block copolymer (C) is 5 to 45 parts by mass with respect to 100 parts by mass of the polymer component. When the content thereof is less than 5 parts by mass, durability, in particular, the effect of improving dry heat aging resistance and oil aging resistance cannot be sufficiently obtained. When the content thereof exceeds 45 parts by mass, the barrier properties are lowered. The content of the block copolymer (C) is preferably 8 to 32 parts by mass, more preferably 10 to 30 parts by mass, still more preferably 12 to 28 parts by mass, particularly preferably 15 to 25 parts by mass, and most preferably 16 to 24 parts by mass with respect to 100 parts by mass of the polymer component contained in the resin composition forming the barrier layer.

In the present invention, the total content of the polyolefin-based elastomer (B) and the block copolymer (C) is required to be less than 70 parts by mass with respect to 100 parts by mass of the polymer component. When the content thereof exceeds 70 parts by mass, the barrier properties are lowered. The total content of the polyolefin-based elastomer (B) and the block copolymer (C) is preferably 68 parts by mass or less, more preferably 65 parts by mass or less, and still more preferably 60 parts by mass or less with respect to 100 parts by mass of the polymer component, and the lower limit thereof is preferably 20 parts by mass or more, more preferably 30 parts by mass or more, and still more preferably 40 parts by mass or more.

The block copolymer (C) has bimodal melting peaks in differential scanning calorimetry (DSC), the melting peak temperature on the low temperature side is 85°C or more, and the melting peak temperature on the high temperature side is 200°C or more. The melting peak on the low temperature side is derived from the polyolefin skeleton, and the melting peak on the high temperature side is derived from the polyamide block. When the melting peak temperature on the low temperature side is less than 85°C, sufficient oil aging resistance cannot be obtained. When the melting peak temperature on the high temperature side is less than 200°C, sufficient oil aging resistance and dry heat aging resistance cannot be obtained.

The melting peak temperature on the low temperature side of the block copolymer (C) is preferably 90°C or more, and more preferably 100°C or more, and the upper limit thereof is lower than the melting peak on the high temperature side, that is, less than 200°C, and is preferably 150°C or less. A preferable range of the melting peak on the low temperature side is 90 to 120°C, preferably 95°C to 110°C, and more preferably 100°C to 105°C.

The upper limit of the melting peak temperature on the high temperature side of the block copolymer (C) is preferably 300°C or less, and more preferably 250°C or less. A preferable range of the melting peak temperature on the high temperature side is 200 to 230°C, and more preferably 210 to 220°C.

### <Other components>

The resin composition contained in the barrier layer may contain an antioxidant. Examples of the antioxidant that may be used include various phenolic compounds such as semi-hindered phenols, less-hindered phenols, hindered phenols, phenol acrylates, and bisphenols, and sulfur-containing antioxidants such as thioether compounds, mercaptobenzimidazole compounds, dithiocarbamic acid compounds, and thiourea compounds. The addition amount of the antioxidant is preferably 3.0 parts by mass or less, more preferably 0.3 parts by mass to 1 part by mass, and particularly preferably 0.4 parts by mass to 0.8 parts by mass with respect to 100 parts by mass of the polymer component.

Further, the resin composition contained in the barrier layer may contain a metal deactivator. Examples of the metal deactivator that may be used include phenolic compounds having a hindered phenol structure. The content of the metal deactivator is usually 0.01 parts by mass to 1.5 parts by mass, preferably 0.05 parts by mass to 1 part by mass, and more preferably 0.05 parts by mass to 0.5 parts by mass with respect to 100 parts by mass of the polymer component.

The resin composition contained in the barrier layer may contain one or more other additives, that is, additives such as lubricants, antistatic agents, acid acceptors, other resin components other than the above-described (A), (B), and (C), colorants, antioxidants, crystal nucleating agents, fillers, reinforcing materials, heat-resistant agents, and light-proofing agents.

A hose using the composition of the present invention and a method for producing the hose are not particularly limited, but an example will be described below.

### <Refrigerant transport hose and method for producing the same>

The barrier layer of the refrigerant transport hose of the present invention is excellent in durability and barrier properties and thus is suitable as a barrier layer of a hose for transporting refrigerants for various substances such as liquid and gas, and is particularly suitable for a refrigerant transport hose having a multilayer structure in which one or more other layers are laminated on the barrier layer.

Reference numeral 10 in Fig. 1 indicates a specific example of the hose. The hose 10 is a refrigerant transport hose, and although its producing method is not particularly limited, a barrier layer 12 therein is usually formed by melting the above resin composition in the present invention and extruding the melt onto a mandrel (tube type).

The thickness of the barrier layer 12 is preferably thick in consideration of the barrier properties, but when the thickness is too thick, the flexibility is lowered. Therefore, the thickness of the barrier layer 12 is preferably 50 µm to 450 µm, and more preferably 150 µm to 400 µm. As illustrated in the figure, the barrier layer 12 is the innermost layer and is in contact with refrigerant and oil (such as lubricating oil) flowing through the hose during use.

In the case of multilayer structure, any one or more of a rubber layer 14, 18, 22 and a reinforcing yarn layer 16, 20 are generally laminated on the barrier layer 12. Here, an inner rubber layer 14, a first reinforcing yarn layer 16, an intermediate rubber layer 18, a second reinforcing yarn layer 20, and an outer rubber layer 22 are formed on an outer periphery of the barrier layer 12 in the order described.

There is no particular limitation on the reinforcing yarn layer 16, 20 and commonly used reinforcing yarns may be used therefor. In general, polyester, wholly aromatic polyester, nylon, vinylon, rayon, aramid, polyarylate, polyethylene naphthalate, and blended yarns thereof are used, and these reinforcing yarns are wound in a spiral shape.

The number of reinforcing yarn layers is not limited to two and may be one or three or more. However, when a plurality of reinforcing yarn layers are provided, the direction of the spiral of one reinforcing yarn layer is preferably opposite to that of other adjacent reinforcing yarn layers.

The rubber constituting the rubber layers 14, 18, 22 is generally butyl rubber (IIR), chlorinated butyl rubber (Cl-IIR), chlorinated polyethylene, chlorosulfonated polyethylene, brominated butyl rubber (Br-IIR), isobutylene-bromoparamethylstyrene copolymer, EPR (ethylene-propylene copolymer), EPDM (ethylene-propylene-diene terpolymer), NBR (acrylonitrile butadiene rubber), CR (chloroprene rubber), hydrogenated NBR, acrylic rubber, ethylene acrylic rubber (AEM), a blend of two or more of these rubbers, or a blend with a polymer containing these rubbers as a main component, and butyl rubber or EPDM rubber is preferably used. For these rubbers, formulations including commonly used fillers, processing aids, antioxidants, vulcanizing agents, and/or vulcanization accelerators may be applied.

The rubber types used for these rubber layers 14, 18, 22 may be the same type or different types, but the intermediate rubber layer 18 is preferably made of rubber exhibiting good contactability with the inner rubber layer 14 and the outer rubber layer 22.

The thickness of the inner rubber layer 14 is preferably approximately 0.5 to 4 mm from the viewpoint of flexibility. The thickness of the intermediate rubber layer 18 is preferably approximately 0.1 to 0.6 mm, and the thickness of the outer rubber layer 22 is preferably approximately 0.5 to 2 mm.

In the present invention, a refrigerant transport hose excellent in both durability and processability can be obtained by using, as the polymer to be used for the barrier layer, the specific block copolymer (C) in which a polyamide is grafted on a polyolefin skeleton in the specific amount in addition to the polyamide resin (A) and polyolefin-based elastomer (B), which have been conventionally used. In particular, the durability is improved as compared with a conventional combination of the polyamide resin (A) and the polyolefin-based elastomer to which an acid acceptor such as magnesium oxide or hydrotalcite is added.

### Examples

### (1) Production of sheet

Materials listed in the table below were melt-kneaded using the twinscrew kneader manufactured by Toyo Seiki Seisaku-sho, Ltd. with the formulation shown in the table to obtain resin pellets. Thereafter, a T-die molding machine manufactured by Toyo Seiki Seisaku-sho, Ltd. was used to obtain a resin sheet having a thickness of 0.35 mm. The following evaluation tests were conducted using the resin sheet.

### (2) Evaluations

### (2-1) Initial tensile properties

A resin sheet having a thickness of 0.35 mm was punched into a dumbbell piece for a tensile test, and a breaking test was performed at a tensile rate of 100 mm/min to measure a tensile breaking elongation and a tensile breaking strength.

### (2-2) 150°C dry heat aging test

A resin sheet having a thickness of 0.35 mm was punched into a dumbbell piece for a tensile test, left in an oven set at 150°C, and a breaking test was performed on the resulting sample subjected to heat treatment for 168 hours at a tensile rate of 100 mm/min to measure a tensile breaking elongation and a tensile breaking strength and deterioration rates of those were listed based on values of these test items before aging defined as 100%.

### (2-3) 150°C oil aging resistance test

A resin sheet having a thickness of 0.35 mm was punched into a dumbbell piece for a tensile test, and an oil (Duffney Hermetic Oil SP-A2: manufactured by Idemitsu Kosan Co., Ltd.) adjusted to a water content of 2000 ppm was put into a 47 g pressure vessel, and the dumbbell piece was introduced thereinto. The pressure vessel was cooled in a freezing oven set at -30°C for 30 minutes and then evacuated for 5 minutes. The pressure vessel was returned to room temperature and placed in an oven set at 150°C and placed in the oven until 168 hours passed. This sample was subjected to a breaking test at a tensile rate of 100 mm/min, and to measure the tensile breaking elongation and tensile breaking strength and deterioration rates of those were listed based on values of these test items before aging defined as 100%.

### (2-4) Barrier properties

In the barrier properties test, measurement was performed on a resin sheet having a thickness of 0.35 mm at a measurement temperature of 90°C using a differential pressure method (JIS K7126-1) and refrigerant R-134a using a differential pressure type gas/vapor permeability measuring device (GTR-30XAD2, G2700T-F, GTR TEC Corporation, Yanaco Technical Science Co., Ltd.).

### (2-5) Measurement of melting peak temperature

The block copolymer used was heated at a heating rate of 10°C/min from room temperature to 280°C, then cooled to room temperature at a rate of 10°C/min, and then the temperature thereof was controlled at a heating rate of 10°C/min using a differential scanning calorimeter. As the melting point, the minimum values (melting peaks) of the curve for heat of fusion observed in the second temperature raising program were read.

**[Table 1]**

| | | | Example 1 | Example 2 | Example 3 | Example 4 | Example 5 | Comparative Example 1 | Example 6 | Example 7 | Example 8 | Example 9 |
|---|---|---|---|---|---|---|---|---|---|---|---|---|
| Formulation (parts by mass) | Maleic anhydride modified elastomer | | 36 | 36 | 36 | 36 | 36 | 36 | 18 | 27 | 27 | 36 |
| | Non-modified elastomer | | - | - | - | - | - | - | - | - | - | - |
| | MgO | | - | - | - | - | - | - | - | - | - | 3.39 |
| | DHT-4A | | - | - | - | - | - | - | - | - | - | 3.39 |
| | Nylon 6 (1011FB) | | 29.5 | 28 | 24 | 20 | 16 | 8 | 20.5 | 18.25 | 22.8 | 24 |
| | Nylon 6 (1022B) | | 23.1 | 21.6 | 17.6 | 13.6 | 9.6 | 1.6 | 14.1 | 11.85 | 16.4 | 17.6 |
| | Nylon 6 (1022UM) | | 6.4 | 6.4 | 6.4 | 6.4 | 6.4 | 6.4 | 6.4 | 6.4 | 6.4 | 6.4 |
| | Block copolymer (LP81) | | - | - | - | - | - | - | - | - | - | - |
| | Block copolymer (LP91) | | 5 | 8 | 16 | 24 | 32 | 48 | 41 | 36.5 | 27.4 | 16 |
| | Copper inhibitor (CDA-6) | | - | - | - | - | - | - | - | - | - | - |
| | Copper inhibitor (CDA-10) | | 0.2 | 0.2 | 0.2 | 0.2 | 0.2 | 0.2 | 0.2 | 0.2 | 0.2 | 0.2 |
| | Phenolic antioxidant (GA-80) | | 0.5 | 0.5 | 0.5 | 0.5 | 0.5 | 0.5 | 0.5 | 0.5 | 0.5 | 0.5 |
| | Sulfur-containing antioxidant (TP-D) | | 0.5 | 0.5 | 0.5 | 0.5 | 0.5 | 0.5 | 0.5 | 0.5 | 0.5 | 0.5 |
| Total amount of elastomer and polyamide block graft copolymer | | | 41 | 44 | 52 | 60 | 68 | 84 | 59 | 63.5 | 54.4 | 52 |
| Initial tensile properties | | Strength (N/mm2) | 53 | 59 | 38 | 45 | 36 | 27 | 46 | 48 | 49 | 40 |
| | | Elongation (%) | 403 | 496 | 450 | 464 | 445 | 455 | 430 | 464 | 482 | 415 |
| 150°C dry heat aging test | | Strength (%) | 93 | 80 | 89 | 103 | 103 | 113 | 90 | 83 | 85 | 98 |
| | | Elongation (%) | 90 | 93 | 84 | 102 | 103 | 113 | 88 | 96 | 94 | 80 |
| 150°C oil aging resistance test | | Strength (%) | 55 | 54 | 58 | 57 | 59 | 78 | 57 | 53 | 51 | 58 |
| | | Elongation (%) | 52 | 57 | 57 | 66 | 93 | 116 | 76 | 80 | 51 | 69 |
| Barrier properties | | g/24h·m²·atm | 0.03 | 0.03 | 0.04 | 0.1 | 0.2 | 18.1 | 0.08 | 0.18 | 0.04 | 0.04 |

**[Table 2]**

| | | Comparativ e Example 2 | Comparativ e Example 3 | Comparativ e Example 4 | Comparativ e Example 5 | Comparativ e Example 6 | Comparativ e Example 7 | Comparativ e Example 8 | Comparativ e Example 9 | Comparativ e Example 10 | Comparativ e Example 11 | Comparativ e Example 12 |
|---|---|---|---|---|---|---|---|---|---|---|---|---|
| | Maleic anhydride modified elastomer | 18 | 36 | 18 | 18 | - | 18 | 36 | - | 36 | 36 | 36 |
| | Non-modified elastomer | 18 | - | 18 | 18 | - | 18 | - | - | - | - | - |
| | MgO | - | - | 3.39 | 3.39 | - | - | - | - | - | - | - |
| | DHT-4A | - | - | 3.39 | 3.39 | - | - | - | - | - | - | - |
| | Nylon 6 (1011FB) | 32 | 32 | 32 | 32 | - | - | - | 25 | 24 | 16 | 16 |
| | Nylon 6 (1022B) | 25.6 | 25.6 | 25.6 | 25.6 | - | - | - | 18.6 | 17.6 | 9.6 | 9.6 |
| | Nylon 6 (1022UM) | 6.4 | 6.4 | 6.4 | 6.4 | - | - | - | 6.4 | 6.4 | 6.4 | 6.4 |
| Formulatio n | Block copolymer (LP81) | - | - | - | - | - | - | - | - | 16 | 32 | - |
| | Block copolymer (LP91) | - | - | - | - | 100 | 64 | 64 | 50 | - | - | - |
| | Block copolymer (LB91) | - | - | - | - | - | - | - | - | - | - | 32 |
| | Copper inhibitor (CDA-6) | 0.2 | - | 0.2 | - | - | - | - | - | - | - | - |
| | Copper inhibitor (CDA-10) | - | 0.2 | - | 0.2 | 0.2 | 0.2 | 0.2 | 0.2 | 0.2 | 0.2 | 0.2 |
| | Phenolic antioxidant (GA-80) | 0.12 | 0.5 | 0.12 | 0.5 | 0.5 | 0.5 | 0.5 | 0.5 | 0.5 | 0.5 | 0.5 |
| | Sulfur-containing antioxidant (TP-D) | 0.28 | 0.5 | 0.28 | 0.5 | 0.5 | 0.5 | 0.5 | 0.5 | 0.5 | 0.5 | 0.5 |
| Total amount of elastomer and block copolymer | | 36 | 36 | 36 | 36 | 100 | 100 | 100 | 50 | 52 | 68 | 68 |
| Initial tensile properties | Strength (N/mm2) | 44 | 42 | 40 | 43 | 25 | 21 | 24 | 52 | 47 | 35 | 30 |
| | Elongation (%) | 414 | 428 | 376 | 387 | 351 | 417 | 593 | 408 | 478 | 464 | 445 |
| 150°C dry heat aging test | Strength (%) | 81 | 89 | 84 | 81 | 130 | 131 | 91 | 70 | 81 | 86 | 35 |
| | Elongation (%) | 75 | 81 | 17 | 64 | 120 | 124 | 99 | 37 | 89 | 90 | 22 |
| 150°C oil aging resistance test | Strength (%) | 47 | 55 | 54 | 64 | 78 | 82 | 90 | 54 | 42 | 27 | 25 |
| | Elongation (%) | 31 | 40 | 34 | 41 | 120 | 139 | 107 | 24 | 30 | 47 | 35 |
| Barrier properties | g/24h·m³·at m | 0.02 | 0.02 | 0.02 | 0.02 | 75.1 | 24.2 | 24.1 | 16.6 | 0.04 | 0.2 | 0.2 |

The materials described in Tables 1 and 2 are as follows.
"Maleic anhydride modified elastomer" (TAFMER MH7010 manufactured by Mitsui Chemicals, Inc., maleic acid modified α-olefin polymer (ethylene-butene copolymer))
"Non-modified elastomer" (TAFMER TX610 manufactured by Mitsui Chemicals, Inc., ethylene-1-butene copolymer)
"MgO" magnesium oxide
"DHT-4A" (Synthetic hydrotalcite manufactured by Kyowa Chemical Industry Co., Ltd.)
"Nylon 6 (1011FB)" (manufactured by Ube Industries, Ltd., low viscosity nylon 6)
"Nylon 6 (1022B)" (manufactured by Ube Industries, Ltd., medium viscosity nylon 6)
"Nylon 6 (1022UM)" (manufactured by Ube Industries, Ltd., nylon 6 containing potassium iodide and copper iodide)
"Block Copolymer (LP81)" (APOLHYA LP81 manufactured by Tokyo Zairyo Co., Ltd., low temperature side melting peak 69°C, high temperature side melting peak 216°C, PA6 grafted polyolefin)
"Block copolymer (LP91)" (APOLHYA LP91 manufactured by Tokyo Zairyo Co., Ltd., low temperature side melting peak 102°C, high temperature side melting peak 216°C, PA6 graft polyolefin)
"Block copolymer (LB91)" (APOLHYA LB91 manufactured by Tokyo Zairyo Co., Ltd., low temperature side melting peak estimated 140°C or less, high temperature side melting peak 187°C, PA11 grafted polyolefin)
"Copper inhibitor (CDA-6)" (manufactured by ADEKA Corporation, N'1,N'12-bis(2-hydroxybenzoyl)dodecanedihydrazide)
"Copper inhibitor (CDA-10)" (manufactured by ADEKA Corporation, N,N'-bis[3-(3,5-di-tert-butyl-4-hydroxyphenyl)propionyl]hydrazine)
"Phenolic antioxidant (GA-80)" (manufactured by SUMITOMO CHEMICAL COMPANY, LIMITED, SUMILIZER (R) GA-80)
"Sulfur-containing antioxidant (TP-D)" (manufactured by SUMITOMO CHEMICAL COMPANY, LIMITED, SUMILIZER (R) TP-D)

### Reference Signs List

10 refrigerant transport hose
12 barrier layer
14, 18, 22 rubber layers
16, 20 reinforcing yarn layers

## Claims

1. A refrigerant transport hose comprising a barrier layer formed from a resin composition containing a polymer component as an innermost layer, the polymer component comprising a polyamide resin (A) and a polyolefin-based elastomer (B),
wherein the innermost layer is to be in direct contact with a refrigerant and an oil flowing in the refrigerant transport hose,
the polymer component further comprises a block copolymer (C) having a structure in which a polyamide block is grafted to a polyolefin skeleton,
a content of the block copolymer (C) is 5 to 45 parts by mass with respect to 100 parts by mass of the polymer component,
a total content of the polyolefin-based elastomer (B) and the block copolymer (C) is less than 70 parts by mass with respect to 100 parts by mass of the polymer component, and
the block copolymer (C) has bimodal melting peaks in differential scanning calorimetry (DSC), a melting peak temperature on a low temperature side is 85°C or more, and a melting peak temperature on a high temperature side is 200°C or more.

2. The refrigerant transport hose according to claim 1, wherein at least a part of the polyolefin-based elastomer (B) is acid-modified.

3. The refrigerant transport hose according to claim 1 or 2, wherein the polyamide resin (A) is nylon 6.

## Patentansprüche

1. Kältemitteltransportschlauch umfassend eine Barriereschicht, die aus einer Harzzusammensetzung gebildet ist, die eine Polymerkomponente als eine innerste Schicht enthält, wobei die Polymerkomponente ein Polyamidharz (A) und ein Elastomer auf Polyolefinbasis (B) umfasst,
wobei die innerste Schicht in direktem Kontakt mit einem Kältemittel und einem Öl zu stehen hat, das in dem Kältemitteltransportschlauch strömt,
die Polymerkomponente ferner ein Blockcopolymer (C) umfasst, das eine Struktur aufweist, in der ein Polyamidblock auf ein Polyolefinskelett aufgepfropft ist,
ein Gehalt des Blockcopolymers (C) 5 bis 45 Masseteile mit Bezug auf 100 Masseteile der Polymerkomponente beträgt,
ein Gesamtgehalt des Elastomers auf Polyolefinbasis (B) und des Blockcopolymers (C) weniger als 70 Masseteile mit Bezug auf 100 Masseteile der Polymerkomponente beträgt, und
das Blockcopolymer (C) bimodale Schmelz-Peaks bei der Dynamischen Differenzkalorimetrie (DDK) aufweist, eine Schmelz-Peak-Temperatur auf einer Niedertemperaturseite 85 °C oder mehr beträgt, und eine Schmelz-Peak-Temperatur auf einer Hochtemperaturseite 200 °C oder mehr beträgt.

2. Kältemitteltransportschlauch nach Anspruch 1, wobei mindestens ein Teil des Elastomers auf Polyolefinbasis (B) säuremodifiziert ist.

3. Kältemitteltransportschlauch nach Anspruch 1 oder 2, wobei das Polyamidharz (A) Nylon 6 ist.

## Revendications

1. Tuyau de transport d'agent réfrigérant comprenant une couche formant barrière formée à partir d'une composition de résine contenant un constituant polymère comme une couche la plus interne, le constituant polymère comprenant une résine de polyamide (A) et un élastomère à base de polyoléfine (B),
dans lequel la couche la plus interne doit se trouver en contact direct avec un agent réfrigérant et une huile s'écoulant dans le tuyau de transport d'agent réfrigérant,
le constituant polymère comprend en outre un copolymère séquencé (C) ayant une structure dans laquelle une séquence de polyamide est greffée à un squelette de polyoléfine,
une teneur du copolymère séquencé (C) est de 5 à 45 parties en masse par rapport à 100 parties en masse du constituant polymère,
une teneur totale de l'élastomère à base de polyoléfine (B) et du copolymère séquencé (C) est inférieure à 70 parties en masse par rapport à 100 parties en masse du constituant polymère, et
le copolymère séquencé (C) présente des pics de fusion bimodaux en calorimétrie différentielle à compensation de puissance (ACD), une température pic de fusion sur un côté de température faible est de 85 °C ou plus, et une température pic de fusion sur un côté de température élevée est de 200 °C ou plus.

2. Tuyau de transport d'agent réfrigérant selon la revendication 1, dans lequel au moins une partie de l'élastomère à base de polyoléfine (B) est modifiée avec un acide.

3. Tuyau de transport d'agent réfrigérant selon la revendication 1 ou 2, dans lequel la résine de polyamide (A) est du nylon 6.
